# NEUE EUROPÄISCHE PATENTSCHRIFT

(11) **EP 0 425 000 B2**
(45) Veröffentlichungstag und Bekanntmachung des Hinweises auf die Entscheidung über den Einspruch: **27.11.1996**
(45) Hinweis auf die Patenterteilung: 22.12.1993
(21) Anmeldenummer: 90202545.1
(22) Anmeldetag: 26.09.1990
(51) Int. Cl.: C01B 17/88, C01G 23/053

(54) **Verfahren zum Konzentrieren einer Schwefelsäure und Wasser enthaltenden Flüssigkeit**
Process for the concentration of sulphuric acid and water containing fluid
Procédé pour concentrer un liquide contenant de l'acide sulfurique et de l'eau

(30) Priorität: 27.10.1989 DE 3935892
(43) Veröffentlichungstag der Anmeldung: 02.05.1991
(73) Patentinhaber: METALLGESELLSCHAFT Aktiengesellschaft, 60015 Frankfurt (DE)
(72) Erfinder: Hohmann, Klaus, D-6238 Hofheim (DE); Dittmar, Heinz, D-6360 Friedberg (DE); Serrano-Velarde, Ramiro, D-6395 Weilrod 2 (DE)

(56) Entgegenhaltungen:
- EP-A- 0 022 181
- EP-A- 0 133 505
- EP-A- 0 262 510
- DE-A- 2 909 029
- DE-B- 1 939 813
- DE-C- 972 412
- US-A- 3 210 156
- CHEMICAL ABSTRACTS, vol. 110, no. 18, 1 Mai 1989, Columbus, Ohio, USA; Krajewski, M.: "Method for concentrating sulfuric acid solutions", Seite 167; ref. no. 157110Y

## Beschreibung

Die Erfindung betrifft ein Verfahren zum Konzentrieren von Schwefelsäure und Wasser enthaltender Flüssigkeit, die eine H₂SO₄-Konzentration, feststofffrei gerechnet, von etwa 15 bis 30 Gew.-% aufweist und gelöste Salze enthält.

Aus der US-A-3 210 156 ist ein Verfahren zur Aufarbeitung von Dünnsäure aus der TiO₂-Produktion bekannt, bei dem eine vorkonzentrierte H₂SO₄ mit einem Tauchbrenner auf eine Konzentration von ca. 60% bei einer Temperatur von 150°C gebracht wird. In einem Folgeschritt wird die so behandalte Säure in einem kristallisator eingebracht und dann durch Vakuumverdampfung auf 90°C abgekühlt, wobei weitere Salze abgeschieden werden.

Bei dem erfindungsgemäßen Verfahren ist es wichtig, mit wenig Frischdampf auszukommen, die Ausbildung störender Verkrustungen für einen möglichst langen Zeitraum zu vermeiden und hohe Durchsatzleistungen zu erreichen. Zur Lösung dieser Aufgabe wird erfindungsgemäß vorgeschlagen, daß man die Flüssigkeit in einer ersten beheizten Behandlungsstufe bei höchsten Temperaturen von 50 bis 70°C im Kreislauf über eine mit Brüden indirekt beheizte erste Wärmeaustauschzone und eine erste Ausdampfzone leitet, daß man aus der ersten Ausdampfzone Brüden und getrennt davon einen Schwefelsäure, Wasser und gelöste Salze enthaltenden Flüssigkeitsstrom mit einem H₂SO₄-Gehalt, feststofffrei gerechnet, von etwa 25 bis 40 Gew.-% abzieht und einer zweiten beheizten Behandlungsstufe aufgibt, daß man die Flüssigkeit in der zweiten beheizten Behandlungsstufe bei höchsten Temperaturen von 130 bis 160°C und bei einem höheren als in derersten Behandlungsstufe herrschenden Druck in mindestens einem Kreislauf über mindestens eine mit Frischdampf beheizte Wärmeaustauschzone und mindestens eine Ausdampfzone leitet, wobei man die Brüden der Ausdampfzone oder - zonen der ersten Wärmeaustauschzone als Heizmedium zuführt, daß man aus einer Ausdampfzone der zweiten Behandlungsstufe teilkonzentrierte Flüssigkeit mit einem H₂SO₄-Gehalt, feststofffrei gerechnet, von 55 bis 70 Gew.-% abzieht und einer Entspannungszone ohne Heizflächen aufgibt, wobei man durch Entspannen die Temperatur der Flüssigkeit gegenüber der höchsten Temperatur in der zweiten Behandlungsstufe um 20 bis 70°C absenkt und aus der Entspannungszone konzentrierte Flüssigkeit mit einem H₂SO₄-Gehalt, feststofffrei gerechnet, von 60 bis 80 Gew.-% abzieht. Bei der feststofffreien Berechnung der H₂SO₄-Konzentration bleiben auch geloste Salze unberücksichtigt.

Dieses Verfahren betrifft die Aufarbeitung von verdünnter Schwefelsäure, die bei der Produktion von TiO₂-Pigmenten anfällt. Diese verdünnte Schwefelsäure enthalt 5 bis 20 Gew.-% an gelösten Salzen, insbesondere Eisen-, Mangan-, Aluminium- und Calciumsulfat.

Für das Verfahren ist es erforderlich, daß die Endkonzentrierung nach der zweiten beheizten Behandlungsstufe nurdurch Entspannung und ohne Heizflächen erfolgt. Dadurch wird in dieser Endstufe die Verkrustungsgefahr, die wegen der hohen Konzentration an H₂SO₄ und Salzen besonders groß ist, bestmöglich reduziert. Thermisch beheizt werden nur die ersten und die zweite Behandlungsstufe, wobei hier die Säure im Gegenstrom zu den Brüden geführt wird. In der ersten Behandlungsstufe sorgt man dafür, daß durch die Konzentrierung ein H₂SO₄-Gehalt, feststofffrei gerechnet, von 40 Gew.-% oder daruntereingehalten wird, weil oberhalb dieser Grenze in verstärktem Maße mit Ausfällungen und dadurch Anbackungen zu rechnen ist.

Eine Weiterbildung der Erfindung besteht darin, daß die zweite Behandlungsstufe zwei Flüssigkeitskreisläufe aufweist, wobei jeder Kreislauf über eine mit Frischdampf beheizte Wärmeaustauschzone und eine Ausdampfzone führt und die beiden Ausdampfzonen den gleichen Druck aufweisen. Hier ergibt sich die Möglichkeit, die beiden Teil-Stufen umschalt bar oder einzeln abschaltbar auszubilden. Auf diese Weise kann man Verkrustungen, die sich in der Teil-Stufe mit höher konzentrierter Flüssigkeit ausgebildet haben, durch Umschalten und Beaufschlagen dieser Teil-Stufe nunmehr mit weniger konzentrierter Flüssigkeit mindestens teilweise beseitigen oder ein weiteres Anwachsen der Verkrustungen verhindern. Die Benutzungsdauer der Anlage, bevor ein Abschalten und Reinigen der Heizflächen erforderlich ist, kann dadurch erheblich verlängert werden.

Für das Verfahren ist es nicht nötig, die der ersten Behandlungsstufe zugeführte Flüssigkeit mit mehr oder weniger Aufwand vorzukonzentrieren. Es kann aber nützlich sein, diese Flüssigkeit durch Abwärme anzuwärmen, z.B. durch Verwenden von Brüden- und/oder Frischdampfkondensat.

Wegen der Agressivität der zu behandelnden Medien ist die Materialauswahl für die Anlage wichtig. Vorteilhaft ist die Verwendung von Stahl mit einer Blei- und einer Steinauskleidung. Die Leitungen, Kreislaufleitungen und auch die Ausdampfbehälter können so dauerhaft gegen den Säureangriff geschützt werden. Für die Rohre der Wärmeaustauscher kann man z.B. Graphit verwenden.

Ausgestaltungsmöglichkeiten des Verfahrens werden mit Hilfe der Zeichnung erläutert.
- Fig. 1: zeigt eine erste Variante und
- Fig. 2: eine Variante mit einer zweiteiligen zweiten Behandlungsstufe.

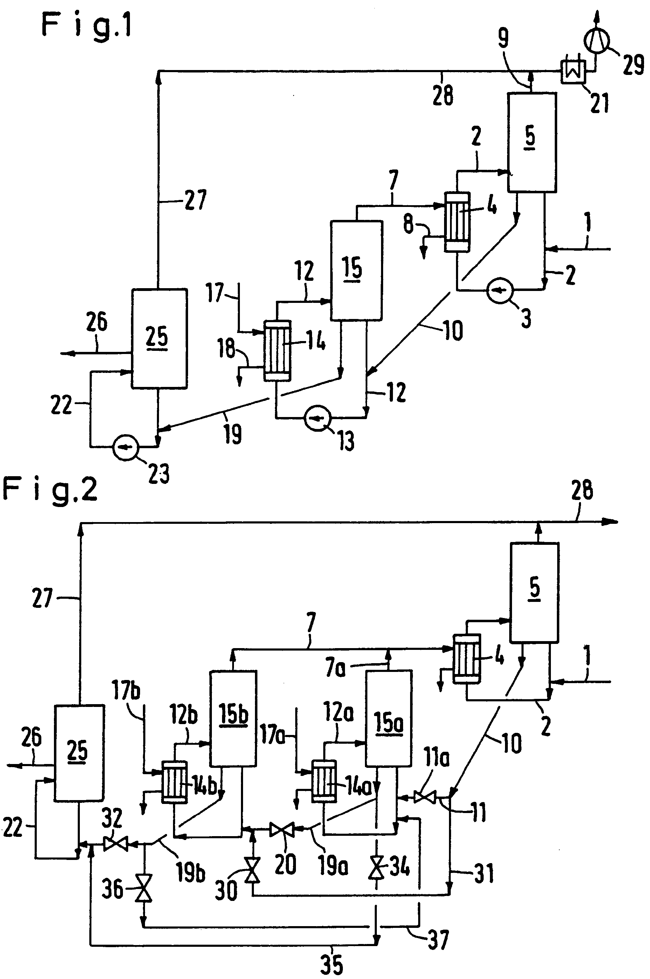

Gemäß Fig. 1 wird die zu konzentrierende, Schwefelsäure, Wasser und gelöste Salze enthaltende Flüssigkeit in der Leitung (1) herangeführt. Der H₂SO₄-Gehalt liegt im Bereich von etwa 15 bis 25 Gew.-%, feststofffrei gerechnet. Zur ersten thermischen Behandlungsstufe gehören die Kreislaufleitung (2) mit der Kreislaufpumpe (3), der erste indirekte Wärmeaustauscher (4) und der erste Ausdampfbehälter (5). Der Wärmeaustarnscher (4) wird mit Brüden aus der Leitung (7) beheizt, Brüdenkondensat fließt in der Leitung (8) ab. Der Ausdampfbehälter ist nur teilweise mit Flüssigkeit gefüllt, Brüden ziehen in der Leitung (9) ab. Am Ausgang des Wärmeaustauschers (4) und im Behälter (5) weist die Flüssigkeit die höchsten Temperaturen In der ersten Behandlungsstufe auf, diese Temperaturen liegen im Bereich von 50 bis 70°C. Der H₂SO₄-Gehalt der Flüssigkeit erreicht hier, feststofffrei gerechnet, etwa 25 bis 40 Gew.-%.

In der Leitung (10) zieht man diese Flüssigkeit ab und gibt sie der zweiten thermischen Behandlungsstufe auf. Zur zweiten thermischen Behandlungsstufe gehören die Kreislaufleitung (12), die Kreislaufpumpe (13), der indirekte Wärmeaustauscher (14) und der Ausdampfbehälter (15). Diese zweite Stufe wird mit Frischdampf beheizt, der in der Leitung (17) zum Wärmeaustauscher (14) geführt wird. Kondensat fließt In der Leitung (18) ab. Der Ausdampfbehälter (15) ist ebenfalls nur teilweise mit Flüssigkeit gefüllt, die daraus abziehenden Brüden gelangen in der Leitung (7) zum Wärmeaustauscher (4).

Am Ausgang des Wärmeaustauschers (14) und im Ausdampfbehälter (15) liegen die Temperaturen der Flüssigkeit im Bereich von 130 bis 160°C und die Flüssigkeit weist einen H₂SO₄-Gehalt, feststofffrei gerechnet, von 55 bis 70 Gew.-% auf. Der Druck im Ausdampfbehälter (15) ist um 0,2 bis 1 bar höher als im Ausdampfbehälter (5). Um diesen Druckunterschied und die unvermeidlichen Reibungsverluste zu überwinden, ohne die Leitung (10) mit einer Förderpumpe versehen zu müssen, ist der Ausdampfbehälter (5) der ersten Behandlungsstufe um mehrere Meter und insbesondere 2 bis 10 m höher als der Ausdampfbehälter (15) der zweiten Behandlungsstufe angeordnet. Dadurch reicht der höhere hydrostatische Druck im Behälter (5) aus, um die Flüssigkeit ohne weitere Fördereinrichtung durch die Leitung (10) in die Kreislaufleitung (12) fließen zu lassen.

Teilkonzentrierte Flüssigkeit zieht man in der Leitung (19) aus dem Ausdampfbehälter (15) ab und führt sie zu einer Kreislaufleitung (22), die zu einem Entspannungsbehälter (25) gehört. In der Kreislaufleitung (22) befindet sich eine Kreislaufpumpe (23). Aus dem Entspannungsbehälter (25), der teilweise mit Flüssigkeit gefüllt ist, zieht man in der Leitung (26) die konzentrierte Flüssigkeit ab. Die Endkonzentration liegt bei einem H₂SO₄-Gehalt, feststofffrei gerechnet, von 60 bis 80 Gew.-% und vorzugsweise mindestens 65 Gew.-%. Der Druck im Entspannungsbehälter (25) liegt um 0,2 bis 1 bar niedriger als im Ausdampfbehälter (15). Brüden verlassen den Entspannungsbehälter (25) in der Leitung (27) und werden in einer Sammelleitung (28) zusammen mit den Brüden der Leitung (9) einer Kondensation (21) mit Vakuumeinrichtung (29) zugeführt.

Die Verfahrensvariante der Fig. 2 weist eine zweiteilige zweite thermische Behandlungsstufe auf, wobei die beiden Teil-Stufen umschaltbar und auch jeweils für sich abschaltbar ausgebildet sind. Die erste Behandlungsstufe, zu der die Zulaufleitung (1), die Kreislaufleitung (2) und der Ausdampfbehälter (5) gehören, ist genauso ausgestaltet, wie es bereits zusammen mit Fig. 1 erläutert wurde. In Fig. 2 wurden die Pumpen in den Kreislaufleitungen der besseren Übersichtlichkeit wegen weggelassen, ebenso die in Fig. 1 dargestellte Kondensation (21) mit Vakuumeinrichtung (29).

Die die erste thermische Behandlungsstufe in der Leitung (10) verlassende Flüssigkeit tritt durch die Leitung (11) und das geöffnete Ventil (11a) in die Kreislaufleitung (12a) ein, die über den Wärmeaustauscher (14a) und den Ausdampfbehälter (15a) führt. Der Wärmeaustauscher (14a) wird durch Frischdampf aus der Leitung (17a) beheizt, Brüden ziehen aus dem Behälter (15a) in der Leitung (7a) ab. Das Ventil (20) in der Leitung (19a) ist geöffnet, das Ventil (30) in der Leitung (31) geschlossen. Die teilweise konzentrierte Flüssigkeit fließt durch die Leitung (19a) zur anderen Teil-Stufe der zweiten thermischen Behandlung, zu der die Kreislaufleitung (12b), der Wärmeaustauscher (14b), der Ausdampfbehälter (15b), die Zufuhrleitung (17b) für Frischdampf und die Brüden-Ableitung (7) gehören. Die Brüden der beiden Behälter (15a) und (15b), In denen der gleiche Druck herrscht, dienen zum Beheizen des Wärmeaustauschers (4) der ersten thermischen Behandlungsstufe.

Aus der zweiten thermischen Behandlungsstufe zieht man die teilkonzentrierte Flüssigkeit in der Leitung (19b) ab und gibt sie über das geöffnete Ventil (32) der Kreislaufleitung (22) auf, die zum Entspannungsbehälter (25) gehört. Das Ventil (34) in der Leitung (35) ist geschlossen. Endkonzentrierte Flüssigkeit wird in der Leitung (26) abgezogen und die Brüden führt man durch die Leitungen (27) und (28) zur nicht dargestellten Kondensation.

Wenn man bei der Schaltung der Fig. 2 die zweite Teil-Stufe der zweiten thermischen Behandlungsstufe, zu weicher der Ausdampfbehälter (15b) gehört, außer Betrieb setzen will, schließt man das Ventil (20), öffnet das Ventil (34) und leitet die Flüssigkeit vom Behälter (15a) durch die Leitung (35) zur Kreislaufleitung (22). Soll dagegen nur die erste Teil-Stufe mit dem Ausdampfbehälter (15a) außer Betrieb gesetzt werden, so schließt man die Ventile (11a) und (20) und führt die Flüssigkeit aus der Leitung (10) durch die Leitung (31) und das geöffnete Ventil (30) zur Kreislaufleitung (12b). Durch diese Schaltungsmöglichkeiten bleibt die zweite Behandlungsstufe funktionsfähig, wenn auch mit verringerter Leistungsfähigkeit.

Eine weitere vorteilhafte Variante besteht darin, innerhalb derzweiten thermischen Behandlungsstufe der Fig. 2 die beiden Teil-Stufen so umzuschalten, daß die zuerst von der Flüssigkeit durchströmte Teil-Stufe mit dem Ausdampfbehälter (15a) nunmehr nach der anderen Teil-Stufe mit dem Ausdampfbehälter (15b) durchströmt wird. Zu diesem Zweck schließt man das Ventil (11a) und leitet die Flüssigkeit aus der Leitung (10) durch die Leitung (31) und das geöffnete Ventil (30) zur Kreislaufleitung (12b). Die in der Leitung (19b) abfließende Flüssigkeit wird bei geschlossenem Ventil (32) durch das geöffnete Ventil (36) und die Leitung (37) der Kreislaufleitung (12a) eingespeist und die aus dem Ausdampfbehälter (15a) abfließende Flüssigkeit gelangt über das geöffnete Ventil (34) und die Leitung (35) zur Kreislaufleitung (22). Diese Umschaltung ist z.B. dann vorteilhaft, wenn man nach Entstehen von Verkrustungen in der zunächst mit höher konzentrierter Flüssigkeit beaufschlagten Teil-Stufe dieser nun niedriger konzentrierte Flüssigkeit aus der Leitung (10) zuführen will, damit die Verkrustungen abgebaut werden oder zumindest nicht weiter wachsen.

### Beispiele

In den beiden folgenden Beispielen wird jeweils eine wasserhaltige Schwefelsäure konzentriert, die aus der Herstellung von TiO₂-Pigmenten stammt und vorgewärmt ist. Im ersten Beispiel wird gemäß Fig. 1 gearbeitet, die Werte sind in den Tabellen neben den Bezugsziffern für die Leitungen mit (A) gekennzeichnet, wo dies nötig ist. Das zweite Beispiel arbeitet gemäß Fig. 2, die Werte neben den Bezugsziffern für die Leitungen sind mit (B) bezeichnet.

| | 1 (A) | 1 (B) | 10 (A) | 10 (B) |
|---|---|---|---|---|
| Menge (kg/h) | 22 000 | 20 000 | 15 500 | 14 000 |
| H₂SO₄ (Gew.-%) | 19,4 | 19,4 | 27,4 | 27,4 |
| Salze (Gew.-%) | 14,4 | 14,4 | 20,4 | 20,4 |
| Wasser (Gew.-%) | 66,2 | 66,2 | 52,2 | 52,2 |
| H₂SO₄-Gehalt, feststofffrei (Gew.-%) | 23,0 | 23,0 | 34,5 | 34,5 |
| Temperatur (°C) | 76 | 76 | 56 | 56 |

| | 19 | 19a | 19b | 26 (A) | 26 (B) |
|---|---|---|---|---|---|
| Menge (kg/h) | 9 600 | 9 950 | 8 650 | 9 350 | 8 420 |
| H₂SO₄ (Gew.-%) | 44,4 | 39,0 | 44,4 | 45,6 | 45,6 |
| Salze (Gew.-%) | 33,0 | 28,9 | 33,0 | 35,2 | 35,2 |
| Wasser (Gew.-%) | 22,6 | 42,1 | 22,6 | 19,4 | 19,4 |
| H₂SO₄-Gehalt, feststofffrei (Gew.-%) | 67,5 | 48,0 | 67,5 | 70,0 | 70,0 |
| Temperatur (°C) | 142 | 120 | 142 | 115 | 115 |

Frischdampfzufuhr durch die Leitungen (17), (17a) und (17b):

| | 17 | 17a | 17b |
|---|---|---|---|
| Menge (kg/h) | 8 800 | 5 900 | 2 100 |
| Temperatur (°C) | 170 | 155 | 155 |
| Druck (bar) | 8 | 5,5 | 5,5 |

Brüden aus den Behältern (5), (15), (15a), (15b) und (25):

| | 5 (A) | 5 (B) | 15 | 15a | 15b | 25 (A) | 25(B) |
|---|---|---|---|---|---|---|---|
| Menge (kg/h) | 6 450 | 5 800 | 5 950 | 4 050 1 | 300 | 250 | 230 |
| Temperatur (°C) | 42 | 42 | 79 | 79 | 79 | 42 | 42 |

In den Behältern (15), (15a) und (15b) beträgt der Druck jeweils 0,47 bar. Durch die Vakuumeinrichtung (29) liegt der Druck in den Behältern (5) und (25) in beiden Beispielen bei 0,08 bar.

## Patentansprüche

1. Verfahren zum Konzentrieren von Schwefelsäure und Wasser enthaltender Flüssigkeit, die eine H₂SO₄-Konzentration von etwa 15 bis 30 Gew.-%, feststofffrei gerechnet, aufweist und aus der Produktion von TiO₂-Pigmenten kommt und 5 bis 20 Gew.-% an gelösten Salzen enthält, dadurch gekennzeichnet, daß man die Flüssigkeit in einer ersten beheizten Behandlungsstufe bei höchsten Temperaturen von 50 bis 70°C im Kreislauf über eine mit Brüden indirekt beheizte erste Wärmeaustauschzone und eine erste Ausdampfzone leitet, daß man aus der ersten Ausdampfzone Brüden und getrennt davon einen Schwefelsäure, Wasser und gelöste Salze enthaltenden Flüssigkeitsstrom mit einem H₂SO₄-Gehalt, feststofffrei gerechnet, von etwa 25 bis 40 Gew.-% abzieht und einer zweiten beheizten Behandlungsstufe aufgibt, daß man die Flüssigkeit In der zweiten beheizten Behandlungsstufe bei höchsten Temperaturen von 130 bis 160°C und bei einem höheren als in der ersten Behandlungsstufe herrschenden Druck in mindestens einem Kreislauf über mindestens eine mit Frischdampf beheizte Wärmeaustauschzone und mindestens eine Ausdampfzone leitet, wobei man die Brüden der Ausdampfzone oder -zonen der ersten Wärmeaustauschzone als Heizmedium zuführt, daß man aus einer Ausdampfzone der zweiten Behandlungsstufe teilkonzentrierte Flüssigkeit mit einem H₂SO₄-Gehalt, feststofffrei gerechnet, von 55 bis 70 Gew.-% abzieht und einer Entspannungszone ohne Heizflächen aufgibt, wobei man durch Entspannen die Temperatur der Flüssigkeit gegenüber der höchsten Temperatur in der zweiten Behandlungsstufe um 20 bis 70°C absenkt und aus der Entspannungszone konzentrierte Flüssigkeit mit einem H₂SO₄-Gehalt, feststofffrei gerechnet, von 60 bis 80 Gew.-% abzieht.

2. Verfahren nach Anspruch 1, dadurch gekennzeichnet, daß die zweite Behandlungsstufe zwei Flüssigkeitskreisläufe aufweist, wobei jeder Kreislauf über eine mit Frischdampf beheizte Wärmeaustauschzone und eine Ausdampfzone führt und die beiden Ausdampfzonen den gleichen Druck aufweisen.

3. Verfahren nach Anspruch 2, dadurch gekennzeichnet, daß man jedem der beiden Flüssigkeitskreisläufe der zweiten Behandlungsstufe wahlweise Flüssigkeit aus der ersten Behandlungsstufe zuerst einspeisen kann.

## Claims

1. A method for concentrating liquid containing sulfuric acid and water, which has an H₂SO₄ concentration of about 15 to 30 wt-%, calculated free of solids, and is obtained from the production of TiO₂ pigments and contains 5 to 20 wt-% dissolved salts, characterized in that, in a first heated treatment stage at maximum temperatures of 50 to 70°C, the liquid is circulated through a first heat-exchange zone which is indirectly heated with vapours and a first evaporation zone, that vapours and separately therefrom a stream of liquid containing sulfuric acid, water and dissolved salts and having an H₂SO₄ content, calculated free of solids, of about 25 to 40 wt-% is withdrawn from the first evaporation zone and is charged to second heated treatment stage, that in the second heated treatment stage the liquid is passed in at least one circuit through at least one heat-exchange zone heated with live steam and at least one evaporation zone at maximum temperatures of 130 to 160°C and at a pressure higher than that in the first treatment stage, the vapours of the evaporation zone or zones being fed to the first heat-exchange zone as a heating medium, that partially concentrated liquid having an H₂SO₄ content, calculated free of solids, of 55 to 70 wt-% is withdrawn from an evaporation zone of the second treatment stage and is fed to a pressure-relief zone without heating surfaces, whereby the temperature in the second treatment stage is decreased by pressure-relief by 20 to 70°C compared with the maximum temperature in the second treatment stage, and concentrated liquid having an H₂SO₄ content, calculated free of solids, of 60 to 80 wt-% is withdrawn from the pressure-relief zone.

2. The method as claimed in claim 1, characterized in that the second treatment stage has two liquid circuits, where each circuit is passed over a heat-exchange zone heated with live steam and an evaporation zone, and the two evaporation zones have the same pressure.

3. The method as claimed in claim 2, characterized in that to each of the two liquid circuits of the second treatment stage liquid from the first treatment stage can alternatively be fed at first.

## Revendications

1. Procédé pour concentrer du liquide contenant de l'acide sulfurique et de l'eau, qui a une concentration de H₂SO₄ de 15 à 30 % en poids environ, calculée exempte de matières solides, et qui provient de la production de pigments de TiO₂ et contient de 5 à 20% en poids de sels dissous, caractérisé en ce qu'il consiste à faire passer le liquide dans un premier étage de traitement chauffé à des températures maximales de 50 à 70°C en circuit fermé, en passant par une première zone d'échange de chaleur chauffée indirectement par des buées et par une première zone d'évaporation, à soutirer de la première zone d'évaporation des buées et, indépendamment de celles-ci, un courant de liquide contenant de l'acide sulfurique, de l'eau et des sels dissous ayant une teneur en H₂SO₄, calculée exempte de matières solides, de 25 à 40 % environ, et à l'envoyer à un deuxième étage de traitement chauffé, à envoyer le liquide au deuxième étage de traitement chauffé à des températures maximales de 130 à 160°C et sous une pression plus élevée que celle qui règne dans le premier étage de traitement, en au moins un circuit fermé passant par au moins un échangeur de chaleur chauffé par de la vapeur fraîche et par au moins une zone d'évaporation, les buées de la zone ou des zones d'évaporation de la première zone d'échange de chaleur étant amenées en tant que fluide de chauffage, à soutirer d'une première zone d'évaporation du deuxième étage de traitement du liquide partiellement concentré ayant une teneur en H₂SO₄, calculée exempte de matières solides, de 55 à 70 % en poids, et à la charger dans une zone de détente sans surface de chauffe, en abaissant par la détente la température du liquide, par rapport à la température maximale dans le deuxième stade de traitement, de 20 à 70°C et à soutirer de la zone de détente du liquide concentré ayant une teneur en H₂SO₄, calculée exempte de matières solides, de 60 à 80 % en poids.

2. Procédé suivant la revendication 1, caractérisé en ce que le deuxième stade de traitement comporte deux circuits de liquide, chaque circuit passant par une zone d'échange de chaleur chauffée par de la vapeur fraîche et par une zone d'évaporation, et les deux zones d'évaporation ayant la même pression.

3. Procédé suivant la revendication 2, caractérisé en ce qu'il consiste à pouvoir alimenter d'abord chacun des deux circuits de liquide du deuxième étage de traitement, au choix, par du liquide provenant du premier étage de traitement.
